# EUROPÄISCHE PATENTSCHRIFT

(11) **EP 1 825 168 B1**
(45) Veröffentlichungstag und Bekanntmachung des Hinweises auf die Patenterteilung: **18.08.2010**
(21) Anmeldenummer: 05815419.6
(22) Anmeldetag: 29.11.2005
(51) Int. Cl.: F16H 37/04

(54) **MEHRGRUPPENGETRIEBE**
MULTI-GROUP GEARBOX
BOITE DE VITESSES A PLUSIEURS GROUPES

(30) Priorität: 14.12.2004 DE 102004060057
(43) Veröffentlichungstag der Anmeldung: 29.08.2007
(73) Patentinhaber: ZF Friedrichshafen AG, 88038 Friedrichshafen (DE)
(72) Erfinder: HEINZELMANN, Karl-Fritz, 88074 Meckenbeuren (DE)
(86) Internationale Anmeldenummer: PCT/EP2005/012711
(87) Internationale Veröffentlichungsnummer: WO 2006/063676

(56) Entgegenhaltungen:
- EP-A- 0 657 667
- WO-A-2004/104445
- DE-A1- 4 422 900
- DE-A1- 10 152 861
- DE-A1- 19 949 490
- US-A1- 2004 029 683

## Beschreibung

Die vorliegende Erfindung betrifft ein Mehrgruppengetriebe gemäß dem Oberbegriff des Patentanspruchs 1.

Vielgang-Getriebe, beispielsweise Getriebe für Nutzkraftfahrzeuge sind üblicherweise als Mehrgruppengetriebe mit acht, neun, zehn, zwölf oder mehr Gängen ausgebildet. Dies wird durch eine Kombination von mindestens zwei mehrgängigen Einzelgetrieben erreicht. Häufig setzt sich das Gesamtgetriebe aus einem Hauptgetriebe und einem Bereichsgruppengetriebe zusammen, wobei das Bereichsgruppengetriebe dem Hauptgetriebe meist nachgeschaltet ist und beispielsweise zwei Übersetzungsbereiche ermöglicht, wodurch die Ganganzahl der Hauptgetriebes verdoppelt wird.

Des weiteren sind Mehrgruppengetriebe bekannt, die sich in eine Vorschaltgruppe, ein Hauptgetriebe und eine Bereichsgruppe aufteilen, wobei die Vorschaltgruppe meistens als Splitgruppe zum Verdichten der Gangfolge ausgebildet ist und zwei Gänge umfasst und das Hauptgetriebe und die Vorschaltgruppe in 1- oder 2-Vorgelegewellen-Bauweise ausgeführt sind.

Dokument DE 19949490 wird als nächstliegenden Stand der Technik angesehen.

Bei Mehrgruppengetrieben ist nach dem Stand der Technik das Bereichsgruppengetriebe als kurzbauendes Planetengetriebe ausgebildet oder in Vorgelegebauweise als Zwei-Vorgelegewellen-Gruppe ausgeführt, wobei der Rückwärtsgang in das Hauptgetriebe integriert ist. Ein Beispiel für einen in ein Räderwechselgetriebe bzw. Hauptgetriebe eines Mehrgruppengetriebes integrierten Rückwärtsgang ist in der DE 30 12 778 der Anmelderin angegeben. Die Integration des Rückwärtsganges in das Hauptgetriebe erfordert entsprechende Zahnräder sowie ein weiteres Schaltelement zum Schalten des Rückwärtsganges.

Ein in Planetenbauweise ausgeführtes Bereichsgruppengetriebe eines Mehrgruppengetriebes ist beispielsweise aus der DE 41 21 709 der Anmelderin bekannt. Es umfasst ein drehfest auf einer Ausgangswelle des Hauptgetriebes angeordnetes Sonnenrad, ein mit dem Getriebegehäuse über eine erste Schaltkupplung zum Schalten einer ins Langsame übersetzten Schaltstufe drehfest verbindbares Hohlrad und einen den Abtrieb bildenden Steg. Hierbei ist eine zweite Schaltkupplung vorgesehen, die mit der ersten Schaltkupplung gemeinsam betätigbar ist und bei geöffneter erster Schaltkupplung den Steg mit der Ausgangswelle des Grundgetriebes verbindet.

Der vorliegenden Erfindung liegt die Aufgabe zugrunde, ein Mehrgruppengetriebe für ein Kraftfahrzeug anzugeben, welches weniger Bauraum als entsprechende Getriebe nach dem Stand der Technik erfordert. Des weiteren soll das erfindungsgemäße Getriebe ein geringes Gewicht aufweisen und kostengünstig herstellbar sein. Zudem soll das erfindungsgemäße Mehrganggetriebe einen optimierten Wirkungsgrad in allen Gängen aufweisen.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Mehrgruppengetriebe für ein Kraftfahrzeug vorgeschlagen, umfassend ein Hauptgetriebe und ein dem Hauptgetriebe nachgeschaltetes Bereichsgruppengetriebe, bei dem der Rückwärtsgang in das Bereichsgruppengetriebe integriert ist.

Vorzugsweise ist das Bereichsgruppengetriebe in Planetenbauweise ausgeführt, wodurch eine kompakte Bauweise des Gesamtgetriebes erzielt wird.

Im Rahmen einer besonders vorteilhaften Weiterbildung der Erfindung ist vorgesehen, die Hauptgetriebegänge zur Realisierung unterschiedlicher Übersetzungen für den Rückwärtsgang zu verwenden.

Gemäß der Erfindung kann das Mehrgruppengetriebe auch eine Vorschaltgruppe aufweisen, welche vorzugsweise in 1- oder 2-Vorgelegewellen-Bauweise ausgeführt ist.

Durch die erfindungsgemäße Konzeption entfällt die nach dem Stand der Technik im Hauptgetriebe enthaltene Zahnräderkette mit den entsprechenden Zwischenrädern zur Drehrichtungsumkehr für den Rückwärtsgang, so dass der Wirkungsgrad in allen Gängen verbessert wird. Zudem kann dadurch das Getriebe kürzer gebaut werden.

Um den Wirkungsgrad des erfindungsgemäßen Mehrgruppengetriebes mit im Bereichsgruppengetriebe integrierten Rückwärtsgang weiter zu optimieren, wird zudem gemäß der DE 102 39 396 A1 der Anmelderin, deren Offenbarungsgehalt vollinhaltlich auch Gegenstand dieser Beschreibung sein soll, vorgeschlagen, das Getriebe derart auszubilden, dass das Hauptgetriebe mindestens einen direkten Gang aufweist, wobei die Teile, die im direkten Gang nicht am Kraftfluss beteiligt sind, ganz oder teilweise abgekoppelt sind, wenn der direkte Gang geschaltet ist.

Insbesondere ist bei Getrieben mit einer Antriebskonstante die auf der Antriebswelle angeordnete Verzahnung mittels eines Schaltelementes zu- und abschaltbar ausgebildet, so dass sich die Vorgelegewelle im direkten Gang nicht mitdreht. Bei Getrieben mit zwei Antriebskonstanten wird in vorteilhafter Weise die Schaltmuffe zwischen den Antriebskonstanten auf "neutral" geschaltet.

Erfingdungsgemäß kann im direkten Gang der Antrieb des Bereichsgruppengetriebes direkt mit dem Abtrieb verbunden werden.

Durch die erwähnten konstruktiven Maßnahmen beim Schalten des direkten Ganges wird ein Getriebe geschaffen, welches sowohl im direkten Gang als auch in den anderen Gängen einen erhöhten Wirkungsgrad aufweist.

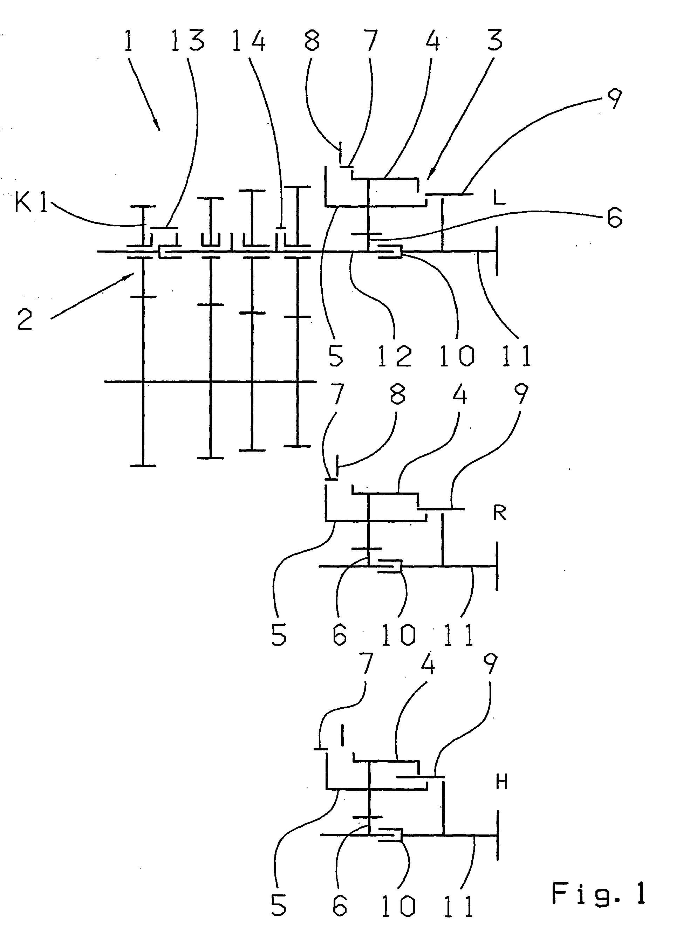

Im Folgenden wird die Erfindung anhand der beigefügten Figur, welche eine schematische Darstellung der drei Schaltstellungen eines in Planetenbauweise ausgeführten Bereichsgruppengetriebes mit integriertem Rückwärtsgang zeigt, beispielhaft näher erläutert.

In der Figur ist ein Mehrgruppengetriebe 1, umfassend ein Hauptgetriebe 2 und ein in Planetenbauweise ausgeführtes Bereichsgruppengetriebe 3, dargestellt. Das Bereichsgruppengetriebe umfasst ein Hohlrad 4, einen Steg 5 und ein Sonnenrad 6, wobei das Sonnenrad 6 ständig mit der Hauptwelle 12 verbunden und über eine Lagerung 10 gelagert ist. Das Planetengetriebe umfasst zwei Schaltelemente, die vorzugsweise als Schaltmuffen 7 bzw. 9 mit drei Stellungen ausgebildet sind. Um die Schaltstellungen des Planetengetriebes 3 zu veranschaulichen, ist dieses dreimal dargestellt, nämlich in den Positionen L (Low), R (Rückwärtsgang) und H (High).

Wie der Figur zu entnehmen ist, ist für die Position L das Hohlrad 4 über eine erste Schaltmuffe 7 mit dem Gehäuse 8 verdrehfest verbunden; ferner ist der Steg 5 des Planetensatzes über eine zweite Schiebemuffe 9 mit dem Abtrieb 11 verbunden. Bei geschaltetem Rückwärtsgang ist der Steg 5 über die Schaltmuffe 7 verdrehfest mit dem Gehäuse 8 verbunden; das Hohlrad 4 ist über die Schaltmuffe 9 mit dem Abtrieb 11 verbunden. Des weiteren sind in der Position H der Steg 5 und das Hohlrad 4 mit dem Abtrieb 11 verbunden.

In der Figur ist die erste Konstante K1 über eine Schiebemuffe 13 mit der Antriebswelle Verbunden und es ist im Hauptgetriebe 2 der erste Gang über die Schiebemuffe 14 eingelegt.

Selbstverständlich fällt auch jede konstruktive Ausbildung, insbesondere jede räumliche Anordnung der Elemente des Bereichsgruppengetriebes an sich sowie zueinander und soweit technisch sinnvoll, unter den Schutzumfang der vorliegende Ansprüche, ohne die Funktion des Getriebes, wie sie in den Ansprüchen angegeben ist, zu beeinflussen, auch wenn diese Ausbildungen nicht explizit in der Figur oder in der Beschreibung dargestellt sind.

### Bezugszeichen

- 1: Mehrgruppengetriebe
- 2: Hauptgetriebe
- 3: Bereichsgruppengetriebe
- 4: Hohlrad
- 5: Steg
- 6: Sonnenrad
- 7: Schaltmuffe
- 8: Gehäuse
- 9: Schaltmuffe
- 10: Lagerung
- 11: Abtrieb
- 12: Hauptwelle
- 13: Schaltmuffe
- 14: Schaltmuffe

- K1: Antriebskonstante

## Patentansprüche

1. Mehrgruppengetriebe für ein Kraftfahrzeug, umfassend ein Hauptgetriebe (2) und ein dem Hauptgetriebe nachgeschaltetes Bereichsgruppengetriebe,(3) **dadurch gekennzeichnet, dass** der Rückwärtsgang (R) in das Bereichsgruppengetriebe (3) integriert ist.

2. Mehrgruppengetriebe für ein Kraftfahrzeug nach Anspruch 1, **dadurch gekennzeichnet, dass** die Hauptgetriebegänge zur Realisierung unterschiedlicher Übersetzungen für den Rückwärtsgang (R) verwendbar sind.

3. Mehrgruppengetriebe für ein Kraftfahrzeug nach Anspruch 1 oder 2, **dadurch gekennzeichnet, dass** das Bereichsgruppengetriebe (3) in Planetenbauweise ausgeführt ist.

4. Mehrgruppengetriebe für ein Kraftfahrzeug nach Anspruch 1, 2 oder 3, **dadurch gekennzeichnet, dass** das Hauptgetriebe (2) in 1- oder 2-Vorgelegewellen-Bauweise ausgeführt ist.

5. Mehrgruppengetriebe für ein Kraftfahrzeug nach einem der vorangehenden Ansprüche, **dadurch gekennzeichnet, dass** es eine Vorschaltgruppe aufweist.

6. Mehrgruppengetriebe für ein Kraftfahrzeug nach Anspruch 5, **dadurch gekennzeichnet, dass** die Vorschaltgruppe in 1- oder 2-Vorgelegewellen-Bauweise ausgeführt ist.

7. Mehrgruppengetriebe für ein Kraftfahrzeug nach einem der vorangehenden Ansprüche, **dadurch gekennzeichnet, dass** das in Planetenbaüweise ausgeführte Bereichsgruppengetriebe (3), umfassend ein Hohlrad (4), einen Steg (5) und ein ständig mit der Hauptwelle (12) verbundenes Sonnenrad (6), zwei Schaltelemente bzw. Schaltmuffen (7, 9) mit jeweils drei Stellungen aufweist.

8. Mehrgruppengetriebe für ein Kraftfahrzeug nach Anspruch 7, **dadurch gekennzeichnet, dass** bei der Position L des Bereichsgruppengetriebes (3) das Hohlrad (4) über eine erste Schaltmuffe (7) mit dem Gehäuse (8) verdrehfest verbunden und der Steg (5) über eine zweite Schiebemuffe (9) mit dem Abtrieb 11 verbunden ist, und dass bei geschaltetem Rückwärtsgang der Steg (5) über die Schaltmuffe (7) mit dem Gehäuse (8) verdrehfest verbunden und das Hohlrad (4) über die Schaltmuffe (9) mit dem Abtrieb (11) verbunden ist, wobei in der Position H des Bereichsgruppengetriebes (3) der Steg (5) und das Hohlrad (4) mit dem Abtrieb (11) verbunden sind.

9. Mehrgruppengetriebe für ein Kraftfahrzeug nach einem der vorangehenden Ansprüche, **dadurch gekennzeichnet, dass** das Hauptgetriebe (2) mindestens einen direkten Gang aufweist, wobei die Teile, die im direkten Gang nicht am Kraftfluss beteiligt sind, ganz oder teilweise abgekoppelt sind, wenn der direkte Gang geschaltet ist.

10. Mehrgruppengetriebe für ein Kraftfahrzeug nach Anspruch 9, **dadurch gekennzeichnet, dass** bei einem Hauptgetriebe (2) mit einer Antriebskonstante die auf der Antriebswelle angeordnete Verzahnung mittels eines Schaltelementes zu- und abschaltbar ausgebildet ist, so dass sich die Vorgelegewelle im direkten Gang nicht mitdreht, und dass bei einem Hauptgetriebe mit zwei Antriebskonstanten die Schaltmuffe zwischen den Antriebskonstanten im direkten Gang auf "neutral" geschaltet wird.

11. Mehrgruppengetriebe für ein Kraftfahrzeug nach Anspruch 9 oder 10, **dadurch gekennzeichnet, dass** im direkten Gang der Antrieb des Bereichsgruppengetriebes direkt mit dem Abtrieb verbindbar ist.

## Claims

1. Multi-group gearbox for a motor vehicle, comprising a main gearbox (2) and a range group gearbox (3) connected downstream of the main gearbox, **characterized in that** the reverse gear (R) is integrated into the range group gearbox (3).

2. Multi-group gearbox for a motor vehicle according to Claim 1, **characterized in that** the main gearbox gears can be used to realize different transmission ratios for the reverse gear (R).

3. Multi-group gearbox for a motor vehicle according to Claim 1 or 2, **characterized in that** the range group gearbox (3) is of planetary-type design.

4. Multi-group gearbox for a motor vehicle according to Claim 1, 2 or 3, **characterized in that** the main gearbox (2) is of 1-countershaft-type or 2-countershaft-type design.

5. Multi-group gearbox for a motor vehicle according to one of the preceding claims, **characterized in that** said multi-group gearbox has a front-mbunted group.

6. Multi-group gearbox for a motor vehicle according to Claim 5, **characterized in that** the front-mounted group is of 1-countershaft-type or 2-countershaft-type design.

7. Multi-group gearbox for a motor vehicle according to one of the preceding claims, **characterized in that** the range group gearbox (3) which is of planetary-type design, comprising a ring gear (4), a web (5) and a sun gear (6) which is permanently connected to the main shaft (12), has two shift elements or shift sleeves (7, 9) with in each case three positions.

8. Multi-group gearbox for a motor vehicle according to Claim 7, **characterized in that**, in the position L of the range group gearbox (3), the ring gear (4) is rotationally fixedly connected by means of a first shift sleeve (7) to the housing (8) and the web (5) is connected by means of a second sliding sleeve (9) to the drive output (11), and **in that** when the reverse gear is engaged, the web (5) is rotationally fixedly connected by means of the shift sleeve (7) to the housing (8) and the ring gear (4) is connected by means of the shift sleeve (9) to the drive output (11), wherein in the position H of the range group gearbox (3), the web (5) and the ring gear (4) are connected to the drive output (11).

9. Multi-group gearbox for a motor vehicle according to one of the preceding claims, **characterized in that** the main gearbox (2) has at least one direct gear, wherein the parts which do not participate in the power flow in the direct gear are fully or partially decoupled when the direct gear is engaged.

10. Multi-group gearbox for a motor vehicle according to Claim 9, **characterized in that**, in the case of a main gearbox (2) with one drive input constant, the toothing arranged on the drive input shaft is designed such that it can be activated and deactivated by means of a shift element, such that in the direct gear the countershaft does not co-rotate, and **in that** in the case of a main gearbox with two drive input constants, in the direct gear the shift sleeve between the drive input constants is shifted to "neutral".

11. Multi-group gearbox for a motor vehicle according to Claim 9 or 10, **characterized in that**, in the direct gear, the drive input of the range group gearbox can be directly connected to the drive output.

## Revendications

1. Boîte de vitesses à plusieurs groupes pour un véhicule automobile, comprenant une boîte de vitesses principale (2) et une boîte-relais à groupes (3) montée en aval de la boîte de vitesses principale, **caractérisée en ce que** la vitesse de marche arrière (R) est intégrée dans la boîte-relais à groupes (3).

2. Boîte de vitesses à plusieurs groupes pour un véhicule automobile selon la revendication 1, **caractérisée en ce que** les rapports de la boîte de vitesses principale peuvent être utilisés pour réaliser différentes multiplications pour la vitesse de marche arrière (R).

3. Boîte de vitesses à plusieurs groupes pour un véhicule automobile selon la revendication 1 ou 2, **caractérisée en ce que** la boîte-relais à groupes (3) est réalisée avec une construction planétaire.

4. Boîte de vitesses à plusieurs groupes pour un véhicule automobile selon la revendication 1, 2 ou 3, **caractérisée en ce que** la boîte de vitesses principale (2) est réalisée avec une construction à 1 ou 2 arbres intermédiaires.

5. Boîte de vitesses à plusieurs groupes pour un véhicule automobile selon l'une quelconque des revendications précédentes, **caractérisée en ce qu'**elle présente un groupe monté devant la boîte de vitesses principale.

6. Boîte de vitesses à plusieurs groupes pour un véhicule automobile selon la revendication 5, **caractérisée en ce que** le groupe monté devant la boîte de vitesses principale est réalisé avec une construction à 1 ou 2 arbres intermédiaires.

7. Boîte de vitesses à plusieurs groupes pour un véhicule automobile selon l'une quelconque des revendications précédentes, **caractérisée en ce que** la boîte-relais à groupes (3) réalisée avec une construction planétaire, comprenant une couronne (4), un porte-satellites (5) et une roue solaire (6) connectée constamment à l'arbre principal (12), présente deux éléments de sélection ou manchons de sélection (7, 9) ayant chacun trois positions.

8. Boîte de vitesses à plusieurs groupes pour un véhicule automobile selon la revendication 7, **caractérisée en ce que** dans la position L de la boîte-relais à groupes (3), la couronne (4) est connectée de manière solidaire en rotation par le biais d'un premier manchon de sélection (7) au boîtier (8) et le porte-satellites (5) est connecté par le biais d'un deuxième manchon coulissant (9) à la prise de force (11), et **en ce que**, lorsque la vitesse de marche arrière est enclenchée, le porte-satellites (5) est connecté de manière solidaire en rotation par le biais du manchon de sélection (7) au boîtier (8) et la couronne (4) et connectée par le biais du manchon de sélection (9) à la prise de force (11), le porte-satellites (5) et la couronne (4) étant connectés à la prise de force (11) dans la position H de la boîte-relais à groupes (3).

9. Boîte de vitesses à plusieurs groupes pour un véhicule automobile selon l'une quelconque des revendications précédentes, **caractérisée en ce que** la boîte de vitesses principale (2) présente au moins un rapport direct, les pièces ne participant pas au flux de force dans le rapport direct étant totalement ou partiellement accouplées quand le rapport direct est enclenché.

10. Boîte de vitesses à plusieurs groupes pour un véhicule automobile selon la revendication 9, **caractérisé en ce que** dans le cas d'une boîte de vitesses principale (2) avec une constante d'entraînement, la denture disposée sur l'arbre d'entraînement est réalisée au moyen d'un élément de sélection de manière enclenchable et désenclenchable, de sorte que l'arbre intermédiaire ne soit pas entraîné en rotation dans le rapport direct, et que dans le cas d'une boîte de vitesses principale avec deux constantes d'entraînement, le manchon de sélection soit commuté à la position "neutre" entre les constantes d'entraînement dans le rapport direct.

11. Boîte de vitesses à plusieurs groupes pour un véhicule automobile selon la revendication 9 ou 10, **caractérisée en ce que** dans le rapport direct, l'entraînement de la boîte-relais à groupes peut être connecté directement à la prise de force.
